Europäisches Patentamt

European Patent Office

Office européen des brevets

(11) Numéro de publication : **0 428 433 B1**

# (12) FASCICULE DE BREVET EUROPEEN

(45) Date de publication du fascicule du brevet :
**22.04.92 Bulletin 92/17**

(51) Int. Cl.$^5$ : **G21C 13/02,** G21C 5/10

(21) Numéro de dépôt : **90403121.8**

(22) Date de dépôt : **05.11.90**

(54) **Dispositif de calage de la plaque supérieure de support des guides de grappes par rapport à la cuve d'un réacteur nucléaire.**

(30) Priorité : **15.11.89 FR 8914988**

(43) Date de publication de la demande :
**22.05.91 Bulletin 91/21**

(45) Mention de la délivrance du brevet :
**22.04.92 Bulletin 92/17**

(84) Etats contractants désignés :
**BE CH DE ES GB IT LI SE**

(56) Documents cités :
**EP-A- 0 138 477
EP-A- 0 234 939
FR-A- 2 073 593
FR-A- 2 407 384
US-A- 4 096 034**

(73) Titulaire : **FRAMATOME
Tour Fiat Cédex 16
F-92084 Paris-la-Défense (FR)**

(72) Inventeur : **Chevereau, Gérard
84, Avenue Thiers
F-93340 Le Raincy (FR)**

(74) Mandataire : **Armengaud, Alain et al
Cabinet ARMENGAUD AINE 3, Avenue
Bugeaud
F-75116 Paris (FR)**

## Description

La présente invention est relative à un dispositif permettant d'assurer le calage et l'appui circonférentiel ou bride de la plaque supérieure qui supporte, au-dessus du coeur d'un réacteur nucléaire du type REP, les guides des grappes de contrôle ou de commande formant la partie active de celui-ci, par rapport à une portée matérialisant une référence de position liée à la cuve de protection et de confinement du réacteur et constituée, soit par une bride parallèle prolongeant l'enveloppe cylindrique entourant le coeur, cette bride étant disposée sous la bride de la plaque supérieure de support et reposant sur un appui interne de la cuve, soit par une surface parallèle prévue au-dessus de la plaque de support et appartenant au couvercle venant fermer la cuve par le dessus de celle-ci.

La solution des problèmes posés par le calage de la plaque de support supérieure portant les guides des grappes de commande par rapport à la cuve du réacteur, présente des difficultés particulières, à la fois en raison des dimensions diamétrales notables de cette plaque et de la nécessité d'organiser à travers les moyens d'appui mis en oeuvre, une circulation convenable du fluide sous pression de refroidissement du coeur, contenu dans cette cuve.

Une réalisation connue dans la technique consiste simplement à monter, entre la plaque de support et sa portée d'appui sur la bride de l'enveloppe du coeur ou le couvercle de la cuve, an anneau légèrement gauchi sur lui-même à la manière d'une rondelle élastique, pour former un ressort conique, appliqué contre les deux surfaces en regard. Un tel anneau répond aux objectifs de calage recherchés et en procurant une étanchéité satisfaisante entre le couvercle de la cuve et la région prévue entre celle-ci et la plaque de support. Toutefois, dans ce cas, le contact entre les surfaces d'appui sur l'anneau s'effectue selon une bande circulaire très étroite, engendrant une pression élevée sur une portée très faible, risquant de provoquer des déformations permanentes des pièces en contact, avec la nécessité d'un remplacement fréquent de celles-ci, en particulier lorsqu'elles sont blessées par les bords du ressort. En outre, sont prévus des dispositifs de réglage de débit, constitués d'ajutages fixes, délicats à réaliser et peu pratiques à inspecter et à changer, s'il y a lieu. De plus, cet anneau, en raison de ses dimensions importantes, tant en diamètre qu'en épaisseur, demande pour sa fabrication et sa mise en place des moyens de réalisation puis de manutention qui sont coûteux, encombrants et difficiles à mettre en oeuvre, les difficultés augmentant lorsqu'il faut remplacer cette pièce une fois contaminée.

Une autre solution consiste à assurer le calage de la plaque de support au moyen d'un ensemble de cartouches individuelles, réparties régulièrement autour de l'axe de la cuve, chacune de ces cartouches étant formée d'un empilement de rondelles élastiques, du genre rondelles Belleville préchargées, contenues dans un logement de la plaque et maintenues par un couvercle vissé sur celle-ci, logement dans lequel se déplace un piston supportant la bride de l'enveloppe de coeur et qui comprime les rondelles au moyen d'une collerette d'appui, solidaire de ce piston. Une telle réalisation, notamment décrite dans le FR-A-2 407 384, présente aussi des inconvénients, en ce sens que, si l'effort exercé sur le piston dépasse la charge opposée par les rondelles, l'appui de la plaque de support est faussé, les cartouches n'assurant plus le calage souhaité. Pour modifier l'assise de la plaque de support, il faut alors démonter les vis maintenant le couvercle du logement afin d'agir sur l'empilement des rondelles, cette opération, qui doit s'effectuer en atmosphère contrôlée, multipliant les risques, notamment de rupture des vis normalement bloquées. Cette solution est donc peu commode et d'une mise en oeuvre délicate.

Enfin, on connaît par le EP-A-0 138 477 une structure de calage de la plaque supérieure de support des guides de grappes d'un réacteur nucléaire par rapport à la cuve de ce dernier, utilisant un ensemble de rondelles élastiques, du genre rondelles Belleville, montées entre deux surfaces d'appui appropriées, prévues entre la plaque de support et une bride ménagée à la partie supérieure de l'enveloppe cylindrique contenant le coeur du réacteur. Toutefois, dans une telle solution, l'empilement des rondelles est chargée par une douille creuse qui traverse cet empilement, cette douille comportant un épaulement d'appui sur les rondelles et étant montée à coulissement dans une fraisure prévue dans la bride. Un manchon étanche permet au fluide de refroidissement de communiquer avec les régions situées au-dessus et au-dessous de la bride de l'enveloppe du coeur. Une telle solution présente l'inconvénient que la douille se déplace par rapport à la bride, ce qui risque de provoquer l'usure de celle-ci et de fausser le calage convenable de la plaque de support par rapport à la bride. En outre, le manchon qui assure l'étanchéité comporte un soufflet métallique qui ne résiste que médiocrement au milieu qui l'entoure et en particulier à la pression du fluide qui traverse le manchon.

La présente invention a pour objet un dispositif de calage de la plaque supérieure de support des guides des grappes de commande par rapport à une portée d'appui liée à la cuve d'une réacteur nucléaire, qui évite ces inconvénients, en permettant un positionnement relatif sûr et efficace de la plaque vis-à-vis d'une portée d'appui appartenant à l'enveloppe du coeur du réacteur ou au couvercle de la cuve de protection, qui soit simple à fabriquer et à mettre en place, facile à remplacer et qui, une fois monté autorise la circulation du fluide de refroidissement du coeur à travers au moins un orifice calibré appartenant au dispositif lui-même et qui peut donc être réalisé en usine avec ce dernier, préalablement à son montage dans la cuve.

A cet effet, le dispositif considéré, comportant un jeu de deux bagues, respectivement une bague supérieure et une bague inférieure, appliquées, l'une sur la plaque de support et l'autre sur la portée d'appui et entre lesquelles est logé un empilement de rondelles élastiques préchargées, se caractérise en ce qu'il comporte un fût de connexion creux, muni d'un canal axial et traversant les deux bagues, ce fût étant prévu pour être engagé dans un alésage ménagé dans la plaque ou la portée d'appui, la bague inférieure comportant des moyens de liaison avec le fût tandis que la bague supérieure est montée à coulissement par rapport à celui-ci sous l'effet de la charge appliquée sur les rondelles élastiques, le fût comportant en outre des moyens pour le solidariser de la plaque ou de la portée d'appui à l'intérieur de l'alésage qui le reçoit, les moyens de liaison entre la bague inférieure et le fût creux, pour rendre les différentes pièces imperdables pendant leur manutention, étant de préférence constitués par des goupilles radiales, traversant des passages ménagés transversalement dans la bague et solidarisées de celle-ci, ces goupilles pénétrant dans des logements prévus dans la surface latérale du fût.

De préférence également, les goupilles radiales sont en nombre au moins égal à deux et régulièrement réparties autour de l'axe commun du fût et de la bague.

Selon une caractéristique particulière du dispositif considéré, le fût de connexion comporte un épaulement d'appui pour la bague inférieure avant immobilisation de celle-ci avec le fût au moyen des goupilles radiales. Avantageusement, les goupilles débordent légèrement des passages ménagés dans la bague et sont immobilisées sur celle-ci par soudure ou autre moyen de fixation analogue.

Selon une autre caractéristique, la partie du fût qui pénètre dans l'alésage ménagé dans la plaque ou la portée d'appui comporte une gorge latérale sensiblement hémicylindrique ou tronconique recevant un jonc torique d'étanchéité, apte à coopérer avec un logement usiné en regard dans l'alésage. De cette façon, le fût creux, solidarisé de la bague inférieure au moyen des ses goupilles radiales et appliqué par cette bague sur la surface de la plaque de support ou de la portée d'appui, est immobilisé par rapport à cette dernière par pénétration du jonc d'étanchéité dans le logement prévu pour le recevoir, réalisé dans la paroi interne de l'alésage, le fût étant en quelque sorte retenu par le jonc à la façon d'un clip, ce qui permet, de manière simple, de les désolidariser rapidement lors d'un visite de maintenance ou d'une réparation, en limitant d'autant l'intervention du personnel travaillant en zone contrôlée.

De préférence, l'empilement des rondelles élastiques montées entre les deux bagues est complété par au moins une entretoise plate, disposée entre l'empilement et la bague supérieure afin d'ajuster la tension de précharge des rondelles et la position relative des deux bagues entre la plaque de support et la portée d'appui.

Dans un mode de réalisation particulier de l'invention, où les bagues inférieure et supérieure portent respectivement sur une bride de l'enveloppe du coeur du réacteur et sous la plaque de support, l'extrémité du fût opposée à l'alésage qui le reçoit, est munie d'un embout comportant un ajutage calibré pour l'écoulement du fluide de refroidissement sous pression à travers successivement le fût, l'alésage et un passage prévu dans la plaque. Dans cette variante, l'embout est avantageusement immobilisé sur le fût par vissage sur un filetage ménagé à l'extrémité du canal axial du fût et par blocage final au moyen d'une languette d'arrêt, portée par le fût et rabattue dans une gorge ou rainure de l'embout.

Dans un autre mode de réalisation, où les bagues inférieure et supérieure s'appliquent respectivement sur la plaque de support et sous une portée d'appui du couvercle de la cuve du réacteur, la bague supérieure comporte des trous radiaux d'écoulement du fluide après traversée de l'alésage de la plaque et du canal axial du fût engagé dans cet alésage.

D'autres caractéristiques d'un dispositif de calage de la plaque supérieure de support des guides des grappes combustibles apparaîtront encore à travers la description qui suit de deux exemples de mise en oeuvre, correspondant aux deux variantes mentionnées ci-dessus, cette description n'étant cependant donnée qu'à titre indicatif et non limitatif, en référence aux dessins annexés sur lesquels :

– La Figure 1 est une vue en coupe schématique par un plan vertical d'une partie du coeur d'un réacteur nucléaire et des principales structures disposées à l'intérieur de la cuve de ce réacteur, notamment de la plaque de support des guides des grappes de commande et d'une enveloppe entourant le coeur.

– La Figure 2 est une vue en coupe transversale, à plus grande échelle, du dispositif de calage selon l'invention, monté entre la plaque de support et une bride d'appui de l'enveloppe, dans le mode de réalisation illustré sur la Figure 1.

– La Figure 3 illustre une variante de réalisation dans laquelle le dispositif de calage est disposé entre une surface d'appui appartenant au couvercle de la cuve du réacteur et la plaque de support, reposant elle-même sur la bride de l'enveloppe du coeur.

– La Figure 4 est une vue en coupe, à plus grande échelle, du dispositif de calage mis en oeuvre dans la variante de réalisation selon la Figure 3.

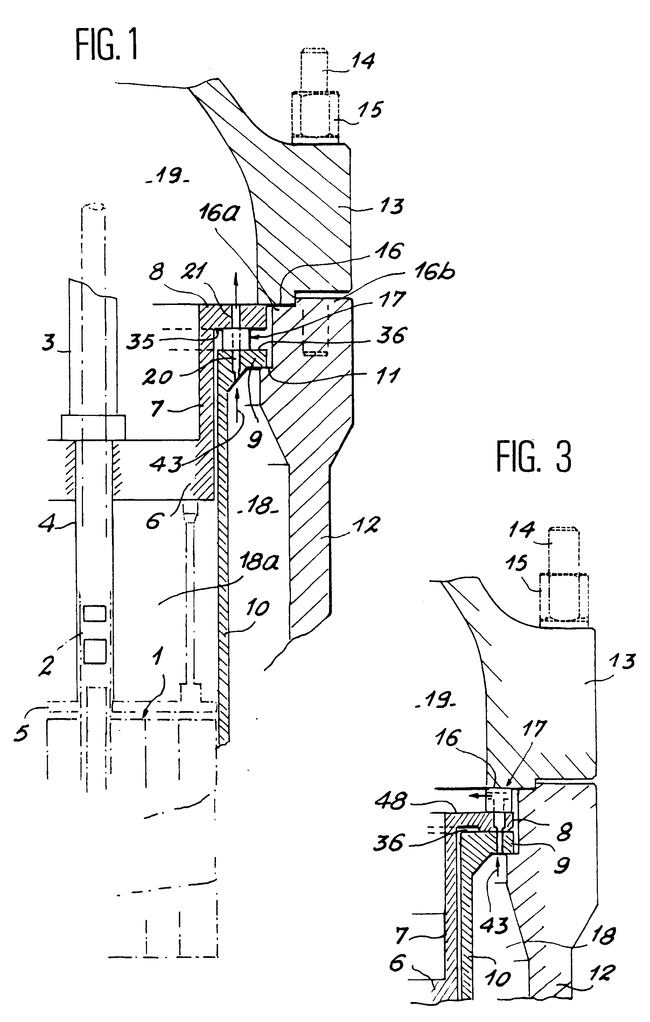

Dans le premier exemple considéré, schématiquement illustré sur la Figure 1, la référence 1 désigne le coeur d'un réacteur nucléaire, notamment du type à refroidissement par eau sous pression. Le coeur 1 est formé par la juxtaposition d'assemblages combustibles dans lesquels peuvent être introduites des grappes de commande 2, dont le détail, en lui-même bien connu dans la technique, n'importe pas directement à la présente invention.

Les grappes de commande du réacteur peuvent être mises en place ou retirés du coeur en se déplaçant à l'intérieur de guides 3, disposés verticalement. Des entretoises tubulaires 4 maintiennent un écartement approprié entre une plaque horizontale 5, dite plaque supérieure de coeur, et une plaque parallèle 6, s'étendant au-dessus de la plaque 5 et sur laquelle sont fixés les guides 3. Cette plaque 6, traversée par les entretoises 4, est communément appelée plaque de support des guides de grappes. Elle se prolonge vers le haut à sa périphérie par une collerette 7, elle-même terminée par une bride transversale 8 faisant ainsi partie intégrante de la plaque 6 et destinée à assurer le support et le maintien en position convenable de cette plaque au-dessus du coeur.

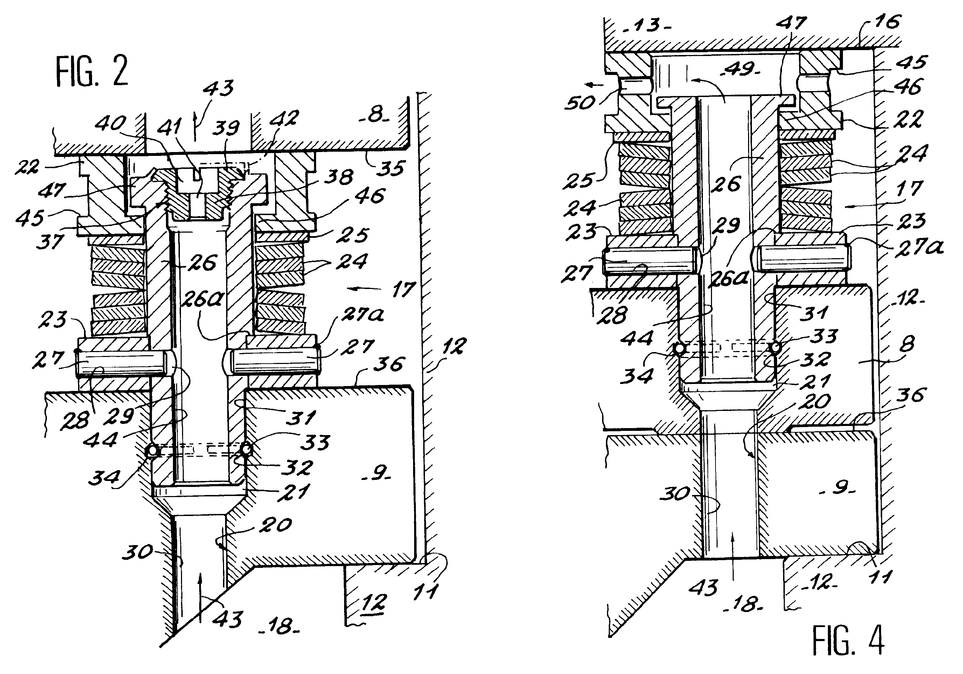

A cet effet, la plaque de support 6 repose par l'intermédiaire de la bride 8 sur une bride parallèle 9 prévue à la partie supérieure d'une enveloppe cylindrique 10 ou enveloppe de coeur, entourant latéralement celui-ci. La bride 9 s'appuie par son bord extérieur sur une portée 11, prévue au voisinage de l'extrémité supérieure de la cuve de protection et de confinement 12 dans laquelle est disposé le coeur 1 et les différents éléments de l'installation brièvement mentionnés ci-dessus. La cuve 12 est fermée par un couvercle 13, immobilisé sur la cuve au moyen de goujons 14 de forte section, bloqués par des écrous 15. Le couvercle 13 présente vers l'intérieur de la cuve une portée d'appui 16 qui vient s'appliquer d'une part sur la face supérieure 16a d'une bride 16b appartenant à la cuve 12 et d'autre part sur le dessus de la bride 8 de la plaque de support 6, en comprimant entre celle-ci et la bride parallèle 9 des dispositifs de calage 17 dont la réalisation, conforme à la présente invention, va maintenant être décrite, notamment en référence à la Figure 2, un tel dispositif permettant à la fois d'assurer le maintien en position relative convenable des deux brides 8 et 9, tout en permettant une communication permanente entre la région 18, située sous la bride 9 et la région 19 au-dessus de la bride 8 sous le couvercle 13, pour le fluide de refroidissement du coeur circulant à travers des passages, respectivement 20 et 21, prévus dans ces brides.

Le dispositif 17 représenté sur cette Figure 2, se compose principalement d'une bague supérieure 22 et d'une bague inférieure 23, de forme générale cylindrique et dont les faces sont parallèles entre elles et aux brides 8 et 9. Entre ces bagues 22 et 23 est monté un empilement de rondelles élastiques 24, du genre rondelles Belleville et dont le nombre et la forme sont choisis par construction de manière à exercer un effort exactement déterminé sur les brides 8 et 9 par l'intermédiaire des deux bagues. Avantageusement, l'empilement des rondelles 24 est associé à une entretoise plate et calibrée 25, permettant de régler la tension initiale des rondelles.

Les deux bagues 22 et 23 sont associés à un fût de connexion creux 26, aménagé de telle sorte qu'il présente un épaulement d'appui 26a sur le bague inférieure 23, tandis que les rondelles 24 et la bague supérieure 22 sont traversées librement par le fût afin de permettre notamment à la bague de coulisser légèrement par rapport à celle-ci consécutivement à la compression des rondelles 24 du fait de l'appui de la bride 8 de la plaque de support sur la bague 23. Cette bague inférieure 23 est en revanche rendu solidaire du fût 26 au moyen d'un ensemble de goupilles radiales 27, engagées dans des passages traversants 28 prévus dans la bague 23. Ces goupilles sont en nombre au moins égal à deux et sont régulièrement réparties autour de l'axe commun de la bague et du fût 26. Elles pénètrent dans ce dernier dans des logements 29 usinés dans la paroi du fût 26 et présentent une longueur telle qu'elles débordent légèrement à l'opposé par rapport à la périphérie de la bague 23, en étant soudées ou autrement fixées à cette dernière en 27a.

L'alésage 20 ménagé dans la bride 9 sur laquelle s'appuie la bague inférieure 23, solidarisée du fût 26 de la manière indiquée ci-dessus, présente un profil étagé en deux parties, respectivement 30 et 31, la partie 30 de plus large diamètre recevant la partie basse du fût. Celui-ci comporte une gorge hémicylindrique ou tronconique 32 dans laquelle est logé un jonc torique 33, apte à coopérer, lorsque le fût est reçu dans l'alésage, dans un logement également hémicylindrique 34, ou tronconique, réalisé dans la paroi interne de la partie 31 de l'alésage 20, de manière à immobiliser le fût dans celui-ci à la façon d'un clip, tout en permettant d'assurer son retrait rapide par simple traction verticale sur le dispositif lors des opérations de maintenance ou de remplacement.

Le dispositif de calage ainsi réalisé est monté entre les brides 8 et 9 respectivement de la plaque de support des guides de grappes et de l'enveloppe du coeur, en appliquant les bagues 22 et 23 contre les surfaces parallèles en regard 35 et 36 de ces brides, tout en permettant leur appui mutuel l'une contre l'autre avec compression relative des rondelles 24, la bague inférieure 23 étant immobilisée avec le fût 26 contre la bride 9 tandis que, sous le poids de la bride 8 et des éléments qu'elle supporte, la bague supérieure 22 peut coulisser légèrement par rapport au fût en fonction de l'écrasement réalisé sur les rondelles.

A sa partie supérieure, le fût 26 comporte un filetage 37 dans lequel est vissé un embout 38 muni d'une collerette d'extrémité 39. L'embout 38 comporte axialement une buse 40 présentant un orifice calibré 41, formant ajutage. L'embout 38 en fin de vissage sur le filetage 37 est immobilisé et bloqué par rapport au fût 26 au moyen d'une languette 42, convenablement rabattue dans une gorge ou rainure (non représentée). L'eau de refroidissement du coeur du réacteur s'écoule de bas en haut selon le sens de la flèche 43, depuis l'alésage 20 dans la bride 9 jusqu'au passage 21 dans la bride 8, en traversant le canal 44 prévu dans l'axe du fût 26 et, à l'extrémité de celui-ci, l'ajutage 41 qui fixe son débit à une valeur déterminée en fonction de la pression du fluide dans la région 18.

La bague supérieure 22 comporte enfin dans sa surface externe une gorge annulaire 45, permettant l'engagement des griffes d'un outil (non représenté), assurant l'extraction du dispositif de calage en cas de démontage de l'ensemble, c'est-à-dire après retrait de la plaque de support 6, la bague 22 en étant tirée vers le haut entraînant le fût 26 par appui d'un rebord 46 de cette bague sous un épaulement 47 prévu à la partie supérieure du fût.

Dans certains cas de fonctionnement accidentels, la pression dans la cavité 19 située au-dessus de la plaque 6 est supérieure à celle dans la cavité 18a entre les plaques 5 et 6, de telle sortie que la force résultante peut être supérieure au tarage des empilements de rondelles Belleville. Il en résulte un déplacement de la plaque 6 support des guides par rapport au couvercle de cuve 12, ouvrant une section de passage entre ces deux cavités. Cet effet de soupape permet de limiter cette différence de pression et réduit les chargements excessifs sur la plaque 6.

Dans une autre variante de réalisation, représentée schématiquement sur la Figure 3, chaque dispositif de calage 17 est cette fois directement monté entre la surface d'appui 16 du couvercle 13 et la face supérieure 48 de la bride 8, celle-ci reposant directement sur la surface 36 de la bride 9 de l'enveloppe de coeur.

Comme on le voit sur la Figure 4, la structure du dispositif est essentiellement la même que celle envisagée dans la première variante et illustrée sur la Figure 2. Toutefois dans ce cas, le fût 26 ne comporte pas, à son extrémité supérieure, d'embout muni d'une ajutage de régulation du débit, le fluide sous pression provenant de l'espace 18 sous la bride 9 après traversée des passages 20 et 21 et écoulement dans le canal axial 44 du fût, se recueillant directement dans un espace 49 à l'intérieur de la bague supérieure 22 entre la partie supérieure du fût et la surface 16 du couvercle de cuve 13 pour s'échapper transversalement vers la région 19 à l'intérieur du couvercle, à travers des trous radiaux 50 convenablement répartis dans la bague 22 autour de l'axe du fût.

On réalise ainsi un dispositif de calage et de positionnement des structures internes d'un réacteur nucléaire, notamment à eau pressurisée, au moyen d'un nombre approprié, par exemple une trentaine de dispositifs identiques de faibles dimensions chacun, répartis autour de l'axe de la cuve. Le dispositif peut être facilement mis en place et retiré par un simple effort d'engagement ou de traction, permettant la coopération d'un jonc torique et d'une gorge de réception de celui-ci à la manière d'un clip, ce qui évite des démontages difficiles à l'aide d'appareillages ou d'outils de manutention généralement peu pratiques. L'ensemble est peu coûteux et surtout procure une sûreté de fonctionnement appréciable, en évitant que les pièces en contact, en appui l'une sur l'autre, ne soient blessées ou détériorées sous l'effet des pressions parfois importantes mises en jeu. Dans tous les cas, la précharge des rondelles élastiques peut être ajustée sans difficultés particulières, si des modifications sont apportées sur le couvercle, par exemple en utilisant des assemblages combustibles de caractéristiques différentes.

Bien entendu, il va de soi que l'invention ne se limite pas aux exemples de réalisation plus spécialement décrits et représentés ci-dessus ; elle en embrasse au contraire toutes les variantes dans le cadre des revendications.

**Revendications**

1. Dispositif de calage et de positionnement de la bride (8) de la plaque (6) supérieure de support des guides de grappes de commande par rapport à une portée d'appui (9) liée à la cuve (12) d'un réacteur nucléaire à eau pressurisée, comportant un jeu de deux bagues, respectivement une bague supérieure (22) et une bague inférieure (23), appliquées l'une sur la bride (8) et l'autre sur la portée d'appui (9) et entre lesquelles est logé un empilement de rondelles élastiques (24) préchargées, caractérisé en ce qu'il comporte un fût (26) de connexion creux (26), muni d'un canal axial (44) et traversant les deux bagues, ce fût étant prévu pour être engagé dans un alésage (20,21) ménagé dans la plaque ou la porte d'appui (9), la bague inférieure (23) comportant des moyens de liaison (27) avec le fût tandis que la bague supérieure (22) est montée à coulissement par rapport à celui-ci sous l'effet de la charge appliquée sur les rondelles élastiques, le fût (26) comportant en outre des moyens (33) pour le solidariser de la bride (8) ou de la portée d'appui (9) à l'intérieur de l'alésage qui le reçoit, les moyens de liaison entre la bague inférieure (23) et le fût creux (26) étant constitués par des goupilles radiales (27), traversant des passages (28) ménagés transversalement dans la bague (23) et solidarisées de celle-ci, ces goupilles pénétrant dans des logements (29) prévus dans la surface latérale du fût.

2. Dispositif selon la revendication 1, caractérisé en ce que les goupilles radiales (27) sont en nombre au moins égal à deux et régulièrement réparties autour de l'axe commun du fût (26) et de la bague (23).

3. Dispositif selon l'une des revendications 1 ou 2, caractérisé en ce que le fût (26) comporte un épaulement d'appui (26a) sur la bague inférieure (23) avant immobilisation de celle-ci avec le fût au moyen des goupilles radiales (27).

4. Dispositif selon l'une quelconque des revendications 1 à 3, caractérisé en ce que les goupilles (27) débordent légèrement des passages (28) ménagés dans la bague (23) et sont immobilisées sur celle-ci par soudure (27a) ou autre moyen de fixation analogue.

5. Dispositif selon l'une quelconque des revendications 1 à 4, caractérisé en ce que la partie du fût (26) qui pénètre dans l'alésage (20,21) ménagé dans la plaque (8) ou la portée d'appui (9) comporte une gorge latérale (32) sensiblement hémicyclindrique ou tronconique recevant un jonc torique (33), apte à coopérer avec un logement (34) usiné en regard dans l'alésage.

6. Dispositif selon l'une quelconque des revendications 1 à 5, caractérisé en ce que l'empilement des rondelles élastiques (24) montées entre les deux bagues (22, 23), est complété par au moins une entretoise plate (25), disposée entre l'empilement et la bague supérieure afin d'ajuster la tension de précharge des rondelles et la position relative des deux bagues entre la plaque de support (8) et la portée d'appui (9).

7. Dispositif selon l'une quelconque des revendications 1 à 6, dans lequel les bagues inférieures (23) et supérieure (22) portent respectivement sur une bride (9) de l'enveloppe (10) du coeur (1) du réacteur et sous la plaque de support (8), caractérisé en ce que l'extrémité du fût (26) opposée à l'alésage (20,21) qui le reçoit, est munit d'un embout (38) comportant un ajutage calibré (41) pour l'écoulement du fluide de refroidissement sous pression à travers successivement le fût, l'alésage et un passage prévu dans la plaque.

8. Dispositif selon la revendication 7, caractérisé en ce que l'embout (38) est immobilisé sur le fût (26) par vissage sur un filetage (37) ménagé à l'extrémité du canal axial (44) du fût et par blocage final au moyen d'une languette d'arrêt (42), portée par le fût et rabattue dans une gorge ou rainure de l'embout.

9. Dispositif selon les revendications 1 à 6, modifié en ce que les bagues inférieure (23) et supérieure (22) s'appliquent respectivement sur la bride (8) de plaque de support (6) et sous une portée d'appui (16) du couvercle (13) de la cuve (12) du réacteur, la bague supérieure (22) comportant des trous radiaux (50) d'écoulement du fluide de refroidissement après traversée de l'alésage (20) de la portée d'appui (9) et du canal axial (44) du fût (26) engagée dans cet alésage.

10. Dispositif selon l'une quelconque des revendications 1 à 9, caractérisé en ce que la bague supérieure (22) comporte extérieurement une gorge annulaire (45) pour l'engagement des griffes d'un outil, propre à assurer son extraction en cas de démontage.

11. Réacteur nucléaire, notamment du type à eau pressurisée, caractérisé en ce que le calage de sa plaque (6) supérieure de support des guides de grappes de commande par rapport à une portée (11) d'appui liée à la cuve (12) de ce réacteur, est réalisé par un ensemble de dispositifs selon l'une quelconque des revendications 1 à 10, répartis régulièrement autour de l'axe de la cuve.

## Patentansprüche

1. Vorrichtung zur Befestigung und Positionierung des Flansches (8) der oberen Trägerplatte (6) der Steuerstabbündel auf einer Auflagefläche (9), die mit dem Behälter (12) eines Druckwasserkernreaktors verbunden ist mit einem Satz bestehend aus zwei Ringen, einem oberen Ring (22) und einem unteren Ring (23), von denen einer auf dem Flansch (8) und der andere auf der Auflagefläche (9) angebracht ist und zwischen denen ein Stapel vorgespannter elastischer Unterlegscheiben (24) angeordnet ist, **gekennzeichnet durch** einen hohlen Verbindungsschaft (26), der mit einem axialen Kanal (44) versehen ist und die beiden Ringe durch.quert, wobei der Schaft vorgesehen ist, um in eine Öffnung (20, 21) eingefügt zu werden, die in der Trägerplatte oder in der Auflagefläche (9) eingearbeitet ist, wobei der untere Ring (23) Verbindungsorgane (27) mit dem Schaft aufweist, während der obere Ring (22) gleitend bezüglich letzterem unter Einwirkung der auf die elastischen Unterlegscheiben einwirkenden Last gelagert ist und der Schaft (26) ferner Organe (33) aufweist, um ihn an dem Flansch (8) oder der Auflagefläche (9) im Inneren der Bohrung, die ihn aufnimmt, zu befestigen, wobei die Verbindungsorgane zwischen dem unteren Ring (23) und dem Hohlschaft (26) aus radialen Stiften (27) bestehen, die die quer in den Ring (23) eingearbeiteten Passagen (28) durchqueren und mit diesem fest verbunden sind, wobei die Stifte die Lager (29) durchdringen, die in der Seitenwand des Schaftes vorgesehen sind.

2. Vorrichtung nach Anspruch 1, dadurch gekennzeichnet, daß wenigstens zwei radiale Stifte (27) vorgesehen sind, die gleichmäßig um die bemeinsame Achse des Schaftes (26) und des Ringes (23) verteilt sind.

3. Vorrichtung nach einem der Ansprüche 1 oder 2, dadurch gekennzeichnet, daß der Schaft eine Auflageschulter (26a) auf dem unteren Ring (23) aufweist vor dessen Fixierung mit dem Schaft mittels der radialen Stifte (27).

4. Vorrichtung nach einem der Ansprüche 1 bis 3, dadurch gekennzeichnet, daß die Stifte (27) leicht aus den Passagen (28), die in den Ringen (27) eingearbeitet sind, überstehen und dort mittels Verschweißen (27a) oder mittels einer anderen analogen Befestigungsart befestigt sind.

5. Vorrichtung nach einem der Ansprüche 1 bis 4, dadurch gekennzeichnet, daß der Teil des Schaftes (26), der in die Bohrung (20, 21) eingreift, die in die Platte (8) oder in das Aufnahmelager (9) einbearbeitet ist, eine seitliche Nut (32) aufweist, die leicht halbzylindrisch oder kegelstumpfförmig geformt ist und einen torischen Sperring (33) aufnimmt, der mit einem Laber (34) zusammenwirkt, das ihm gegenüber in die Bohrung eingearbeitet ist.

6. Vorrichtung nach einem der Ansprüche 1 bis 5, dadurch gekennzeichnet, daß der Stapel der elastischen Unterlegscheiben (24) zwischen den beiden Ringen (22, 23) durch mindestens eine flache Unterlegscheibe (25) vervollständigt wird, die zwischen dem Stapel und dem oberen Ring angeordnet ist, um die Vorspannung der Unterlegscheiben und die relative Lage der beiden Ringe zwischen der Trägerplatte (8) und der Auflagefläche (9) zu justieren.

7. Vorrichtung nach einem der Ansprüche 1 bis 6, bei der der untere Ring (23) und der obere Ring (22) auf einen Flansch (9) der Hülle (10) des Kerns (1) des Reaktors und unter der Trägerplatte (8) angeordnet sind, dadurch gekennzeichnet, daß das Ende des Schaftes (26) gegenüber der Bohrung (20, 21), die diesen aufnimmt, mit einem Ende (38) versehen ist, das ein kalibriertes Ansatzstück für den Durchfluß eines unter Druck stehenden Kühlfluids nacheinander durch den Schaft, die Bohrung und einer in der Platte vorgesehenen Passage versehen ist.

8. Vorrichtung nach Anspruch 7, dadurch gekennzeichnet, daß das Ende (38) auf dem Schaft (26) mittels Verschraubung auf einem Gewinde (37) befestigt ist, das am Ende des axialen Kanals (44) des Schaftes vorbesehen ist und durch Endblockierunng mittels einer Arretierzunge (42), die an dem Schaft angeordnet ist und in eine Nut des Endes einschnappt.

9. Vorrichtung nach den Ansprüchen 1 bis 6, die so modifiziert ist, daß der untere Ring (23) und der obere Ring (22) sich jeweils auf dem Flansch (8) der Trägerplatte (6) und unter der Auflagefläche (16) des Deckels (13) des Behälters (12) des Reaktors anlegen, und der obere Ring (22) radiale Durchflußöffnungen (50) für das Kühlfluid aufweist, nachdem das Kühlfluid die Bohrungen (20) der Auflagefläche (9) und den Axialkanal (44) des Schaftes (26), der in diese Bohrung eingelassen ist, durchlaufen hat.

10. Vorrichtung nach einem der Ansprüche 1 bis 9, dadurch gekennzeichnet, daß der obere Ring (22) außen eine Ringnut (45) aufweist zum Eingriff von Krallen eines Werkzeugs, um dessen Abziehen während einer Demontage zu ermöglichen.

11. Kernreaktor, insbesondere Druckwasserkernreaktor, dadurch gekennzeichnet, daß die Befestigung der oberen Platte (6) des Trägers der Steuerstabbündel bezüglich einer Auflagefläche (11), die mit dem Behälter (12) dieses Reaktors verbunden ist, durch eine Anordnung von Vorrichtungen nach einem der Ansprüche 1 bis 10 erfolgt, wobei diese Vorrichtungen gleichmäßig um die Achse des Behälters herum angeordnet sind.

## Claims

1. Device for the making fast and positioning of the collar (8) of the upper support plate (6) of the guides of control clusters in relation to a bearing surface (9) connected to the vessel (12) of a pressure water nuclear reactor, comprising a set of two rings, respectively an upper ring (22) and a lower ring (23), applied respectively one to the collar (8) and the other to the bearing surface (9) and between which a stack of pre-loaded elastic washers (24) is lodged, characterised in that it comprises a hollow connection shank (26) equipped with an axial passage (44) and passing through the two rings, this shank being provided to be engaged in a bore (20, 21) formed in the plate or the support surface (9), the lower ring (23) comprising means (27) for connection with the shank while the upper ring (22) is mounted for sliding in relation to the support bearing surface under the action of the load applied to the elastic washers, the shank (26) also comprising means (33) for making it fast with the collar (8) or the support bearing surface (9) within the bore which receives it, the connection means between the lower ring (23) and the hollow shank (26) being constituted by radial keeper pins (27) passing through passages (28) formed transversely in the ring (23) and made fast therewith, these pins penetrating into lodgements (29) provided in the lateral surface of the shank.

2. Device according to Claim 1, characterised in that the radial keeper pins (27) are at least equal in number to two and regularly distributed about the common axis of the shank (26) and the ring (23).

3. Device according to one of Claims 1 or 2, characterised in that the shank (26) comprises a support shoulder (26a) on the lower ring (23) before immobilisation of the latter with the shank by means of the radial keeper pins (27).

4. Device according to any one of Claims 1 to 3, characterised in that the keeper pins (27) slightly protrude from the passages (28) formed in the ring (23) and are immobilised on the latter by welding (27a) or other analogous fastening means.

5. Device according to any one of Claims 1 to 4, characterised in that the part of the shank (26) which penetrates into the bore (20, 21) forced in the plate (8) or the support bearing surface (9) comprises a substantially semi-cylyndrical or frusto-conical lateral groove (32) receiving a toric ring (33) adapted to co-operate with a lodgement (34) machined oppositely in the bore.

6. Device according to any one of Claims 1 to 5, characterised in that the stack of elastic washers (24) mounted between the two rings (22, 23) is completed by at least one flat cross-brace (25) disposed between the stack and the upper ring in order to adjust the preloading tension of the washers and the relative position of the two rings between the support plate (8) and the support bearing surface (9).

7. Device according to any one of Claims 1 to 6, in which the lower ring (23) and the upper ring (22) bear respectively on a flange (9) of the envelope (10) of the reactor core and beneath the support plate (8), characterised in that the extremity of the shank (26) opposite to the bore (20, 21) which receives it is equipped with an end piece (38) comprising a calibrated nozzle (41) for the flow of the cooling fluid under pressure through the shank, the bore and a passage provided in the plaque, in succession.

8. Device according to Claim 7, characterised in that the end piece (38) is immobilised on the shank (26) by screwing on to a threading (37) formed on the extremity of the axial passage (44) of the shank and by final locking by means of a stop tongue (42) carried by the shank and turned into a groove or channel of the end piece.

9. Device according to Claims 1 to 6, modified in that the lower ring (23) and the upper ring (22) are applied respectively on the support plate (6) and beneath a support bearing surface (16) of the lid (13) of the reactor vessel (12) the upper ring (22) comprising radial holes (50) for flow of the cooling fluid after passing through the bore (20) of the support bearing surface (9) and the axial passage (44) of the shank (26) engaged in this bore.

10. Device according to any one of Claims 1 to 9, characterised in that the upper ring (22) externally comprises an annular groove (45) for the engagement of the claws of a tool adapted to effect its extraction in the case of dismantlement.

11. Nuclear reactor, especially of the pressure water type characterised in that the making fast of its upper support plate (6) of the guides of control clusters in relation to a support bearing surface (11) connected to the vessel (12) of this reactor is effected by a set of devices according to any one of Claims 1 to 10, distributed regularly about the axis of the vessel.

FIG. 1

FIG. 3

FIG. 2

FIG. 4

EP 0 428 433 B1